# EUROPÄISCHE PATENTSCHRIFT

(11) **EP 0 576 877 B1**
(45) Veröffentlichungstag und Bekanntmachung des Hinweises auf die Patenterteilung: **10.04.1996**
(21) Anmeldenummer: 93109179.7
(22) Anmeldetag: 08.06.1993
(51) Int. Cl.: C08F 8/32, C08F 8/48

(54) **Polymethacryl- und Polyacrylimide mit verbesserter Eigenfarbe**
Poly(meth)acryl imides with improved coloration
Poly(méth)acrylimides à coloration améliorée

(30) Priorität: 13.06.1992 DE 4219479
(43) Veröffentlichungstag der Anmeldung: 05.01.1994
(73) Patentinhaber: BASF Aktiengesellschaft, D-67063 Ludwigshafen (DE)
(72) Erfinder: Besecke, Siegmund, Dr., p.A. Erich Besecke, W-3250 Hameln (DE); Deckers, Andreas, Dr., W-6700 Ludwigshafen (DE); Lauke, Harald, Dr., W-6800 Mannheim 1 (DE)

(56) Entgegenhaltungen:
- EP-A- 0 328 140
- EP-A- 0 331 052
- FR-A- 1 308 359

## Beschreibung

Die vorliegende Erfindung betrifft ein Polymerisat, enthaltend im wesentlichen Einheiten der Formel I 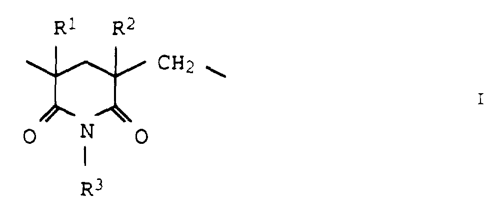 in der
- R¹ und R: für Wasserstoff oder Methyl stehen und
- R³: Wasserstoff, C₁-C₁₈-Alkyl, C₅-C₈-Cycloalkyl, C₆-C₁₀-Aryl, C₆-C₁₀-Aryl-C₁-C₄-alkyl bedeutet, wobei diese Reste bis zu dreifach mit Resten ausgewählt aus der Gruppe bestehend aus C₁-C₄-Alkyl, C₁-C₄-Alkoxy und Halogen substituiert sein können,
mit einem Gelbwert Yᵢ von weniger als 1,8,
erhältlich durch Umsetzen eines Polymeren auf Basis von C₁-C₂₀-Alkylestern der Methacrylsäure und/oder Acrylsäure mit einem primären Amin der allgemeinen Formel II

R³NH₂ II

in Gegenwart einer Verbindung, ausgewählt aus der Gruppe bestehend aus Phosphinsäure und Phosphonsäure und deren Alkalimetall-, Erdalkalimetall- und Aluminium- sowie deren Ammoniumsalzen, wobei das Ammoniumion mit bis zu vier C₁-C₄-Alkyl- und/oder C₅-C₈-Cycloalkylgruppen substituiert sein kann, oder deren Mischungen.

Polymere auf Basis von C₁-C₂₀-Alkylestern der Methacrylsäure und Acrylsäure, deren häufigste Vertreter Methylmethacrylat und Methylacrylat sind, zeichnen sich durch eine hervorragende Transparenz und Witterungsstabilität aus. Aus diesen Gründen verwendet man Polymethylmethacrylate ("PMMA") beispielsweise für die Herstellung optisch anspruchsvoller Teile wie Linsen sowie für Lampenabdeckungen.

Für eine ganze Reihe von Anwendungen besitzen solche Acrylat-Formmassen jedoch eine zu geringe Wärmeformbeständigkeit. Eine der möglichen Lösungen besteht in der Erhöhung der Glasübergangstemperatur durch polymeranaloge Umsetzung beispielsweise von PMMA mit primären Aminen (Imidierung) unter Ausbildung cyclischer Imidstrukturen (s. Gl.1):

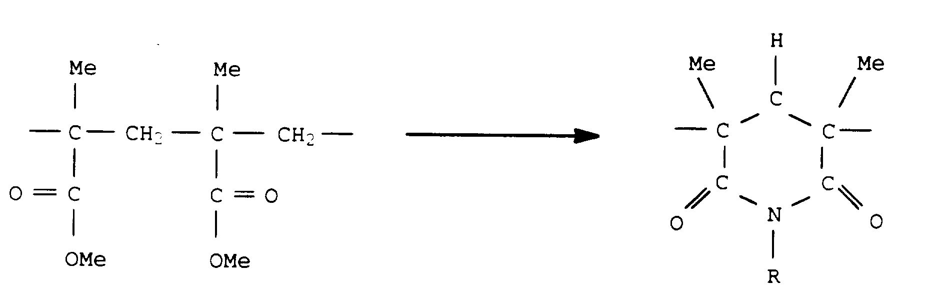

Die Imidierung von PMMA in wäßrigem Milieu führt wie bekannt (s. z.B. EP-A 376,749, S.6, Z. 21-26) aufgrund der vorhandenen freien Carboxyl-Gruppen zu einer verringerten Fließfähigkeit des Polymeren sowie zu einer erhöhten Wasseraufnahme, zu einer größeren Neigung zur Spannungsrißkorrosion und zu einer Verringerung der Bewitterungsbeständigkeit.

Die Imidierung von PMMA in wasserfreiem Milieu wird z.B. in der US-A 2,146,209 beschrieben, in der die Umsetzung in Lösungsmitteln wie Biphenyl und Diethylenglykol durchgeführt wird. Abgesehen von der Toxizität (Biphenyl) und dem großen Aufwand, die Lösungsmittel aufgrund ihrer hohen Siedepunkte zu entfernen, erhält man nach diesem Verfahren uneinheitlich imidierte Produkte mit verringerter Transparenz und einer gelben Eigenfarbe.

In der EP-B 234,726 wird ein Verfahren zur Umsetzung von Methacrylpolymeren mit wasserfreien Aminen in Gegenwart eines Lösungsmittelgemisches (Aromat/Alkohol) bei Temperaturen bis zu 350°C beschrieben. Während der Umsetzung kann man Antioxidantien wie sperrige Phenole oder Organophosphorverbindungen zugeben. Dies verringert den Abbau der Polymerketten, führt jedoch nicht zu einem gelbstichfreieren Produkt (im Vergleich zu Produkten nach diesem Verfahren ohne den Zusatz dieser Antioxidantien).

Ähnlich verhält es sich bei dem in der US-A 4,246,374 beschriebenen Prozeß, bei dem PMMA lösungsmittelfrei auf einem Extruder imidiert wird. Jedoch bildet sich auch hier durch die hohe Reaktionstemperatur Reaktionswasser, was zu teilweise verseiften Polymeren mit Säurezahlen von etwa 1 Äquivalent pro Kilogramm Polymer sowie verringerter Transparenz führt. Einen weiteren Nachteil bilden Nebenprodukte wie Ether und Di- und Trialkylamine.

In der EP-A 396,336 werden Mischungen von Polymethacrylimiden mit sperrigen Organophosphorverbindungen beschrieben, die eine gute Verarbeitungsstabilität beim Spritzgießen und bei der Extrusion aufweisen. Produkte mit einer Gelbstichigkeit (Yᵢ-Wert) unter 1,99 werden jedoch nicht beschrieben.

In der RD 321,114 wird ein Verfahren zur Verbesserung der Gelbstichigkeit von Polymethacrylimiden beschrieben, indem man die Imidierung in einer sauerstofffreien Atmosphäre durchführt. Die Entfernung des Sauerstoffs ist beispielsweise nur durch aufwendige Destillationen zu erreichen, was wirtschaftlich sehr ungünstig ist.

Der Erfindung lag daher die Aufgabe zugrunde, Polymethacryl- und Polyacrylimide mit einem verbessertem Gelbindex zur Verfügung zu stellen, ohne die anderen günstigen Eigenschaften der Polymethacryl- und Polyacrylimide wie thermoplastische Verarbeitbarkeit, hohe Wärmeformbeständigkeit und hohe Transparenz zu beeinträchtigen.

Demgemäß wurden die eingangs definierten Formmassen gefunden.

Außerdem wurde ein Verfahren zur Herstellung dieser Formmassen, deren Verwendung zur Herstellung von Formkörpern sowie Formkörper, erhältlich aus diesen Formmassen, gefunden.

Des weiteren wurde gefunden, daß die erfindungsgemäßen Formmassen bei der Mehrfachverarbeitung, beispielsweise dadurch, daß man sie mehrfach extrudiert, einen geringeren Zuwachs des Gelbindex-Wertes Yᵢ aufweisen als Formmassen aus dem Stand der Technik.

Die Imidierung kann man nach bekannten Verfahren in Lösung oder in der Schmelze durchführen, beispielsweise nach den in der EP-A 234,726 und der US-A 4,246,374 beschriebenen Verfahren.

Die erfindungsgemäßen Polymerisate sind dadurch erhältlich, daß man dem Reaktionsgemisch vor, während oder nach der Imidierung eine Phosphorverbindung zusetzt.

Als geeignete Phosphorverbindungen kommen Phosphinsäure (H₃PO₂), Phosphonsäure (H₃PO₃), deren Alkalimetall-, Erdalkalimetall- und Aluminiumsalze wie Lithium-, Natrium-, Kalium-, Beryllium-, Magnesium-, Calcium- und Aluminiumphosphinate, Lithium-, Natrium-, Kalium-, Beryllium-, Magnesium-, Calcium- und Aluminiumphosphonate, deren Hydrogen- und Dihydrogenderivate wie Lithium-, Natrium-, Kalium-, Beryllium-, Magnesium-, Calcium- und Aluminiumhydrogenphosphinate und -hydrogenphosphonate, bevorzugt Dinatriumhydrogenphosphonat, Lithium-, Natrium-, Kalium-, Beryllium-, Magnesium-, Calcium- und Aluminiumdihydrogenphosphinate und -dihydrogenphosphonate, bevorzugt Natriumdihydrogenphosphinat, Kaliumdihydrogenphosphinat, sowie deren Ammoniumsalze, wobei das Ammoniumion mit bis zu vier C₁-C₄-Alkyl- und/oder C₅-C₈-Cyclo-alkylgruppen substituiert sein kann, wie Ammonium-, Trimethylcetylammonium-, Tetramethylammoniumdihydrogenphosphinat, bevorzugt Ammoniumdihydrogenphosphinat, oder deren Mischungen, in Betracht.

Die Phosphorverbindungen setzt man im allgemeinen im Bereich von 0,01 bis 5, bevorzugt von 0,1 bis 1 Gew.-%, bezogen auf die Menge an zu imidierendem Polymer ein. Bei Mengen von weniger als 0,01 Gew.-% ist nach den bisherigen Erfahrungen kein merklicher Effekt zu beobachten. Bei Mengen von mehr als 5 Gew.-% tritt in der Regel eine Trübung des Polymerisats sowie ein Abfall der Schlagzähigkeit ein.

Führt man die Imidierung in der Schmelze beispielsweise auf einem Extruder oder in einem Rohrreaktor mit statischen Mischelementen durch, so kann man die erfindungsgemäßen Phosphorverbindungen getrennt, oder bevorzugt gelöst, in dem zur Imidierung verwendeten Amin oder als Mischung mit dem zu imidierenden Polymer in die Reaktionszone einbringen.

Bevorzugt imidiert man in Lösung, wobei man zweckmäßig die Komponenten bereits vor der Reaktion in Lösung bringt.

Unter den Polymerisaten auf Basis von C₁-C₂₀-Alkylestern der Methacrylsäure und Acrylsäure sind sowohl Homo- als auch Copolymere zu verstehen, wobei die Copolymeren andere ethylenisch ungesättigten Comonomere enthalten können.

Als C₁-C₂₀-Alkylester der Methacrylsäure kommen bevorzugt die C₁-C₄-Alkylester wie Methylmethacrylat ("MMA"), Ethylmethacrylat, Propylmethacrylat, n-Butylmethacrylat, Isobutylmethacrylat und tert.-Butylmethacrylat in Betracht, wobei Methylmethacrylat besonders bevorzugt ist, sowie Mischungen dieser Monomeren.

Als C₁-C₂₀-Alkylester der Acrylsäure verwendet man bevorzugt die C₁-C₄-Alkylester wie Methylacrylat ("MMA"), Ethylacrylat, Propylacrylat, n-Butylacrylat, Isobutylacrylat und tert.-Butylacrylat, wobei Methylacrylat besonders bevorzugt ist, sowie Mischungen dieser Monomeren.

Als ethylenisch ungesättigte Comonomere kann man Methacrylsäure und Acrylsäure, Maleinsäurederivate wie Imide und C₁-C₁₀-Alkylester, Itaconsäurederivate wie Imide und C₁-C₁₀-Alkylester, Acryl- und Methacrylnitril, Styrol, α-Methylstyrol, Ethylen, Propylen und Butadien sowie Mischungen davon einsetzen.

Die Polymerisate können ein- oder mehrstufig hergestellt werden, wobei bei mehrstufiger Polymerisation wenigstens die äußere Stufe Gruppen enthalten muß, die imidiert werden können.

Im allgemeinen sind die Polymerisate zu mehr als 50, bevorzugt zu mehr als 80 Gew.-% aus C₁-C₂₀-Alkylestern der Methacrylsäure und/oder Acrylsäure aufgebaut. Als besonders vorteilhaft haben sich nach bisherigen Beobachtungen Polymerisate aus 80 bis 100 Gew.-% Methylmethacrylat und 0 bis 20 Gew.-% Methylacrylat in einem Molekulargewichtsbereich von Mₙ (Zahlenmittel) 20.000 bis 300.000 g/mol erwiesen.

Als primäres Amin, R³NH₂, kann man prinzipiell alle bekannten primären Amine einsetzen. Bevorzugt verwendet man ein Amin ausgewählt aus der Gruppe bestehend aus Ammoniak, C₁-C₁₈-Alkylaminen, C₅-C₈-Cycloalkylaminen, C₆-C₁₀-Arylaminen und C₆-C₁₀-Aryl-C₁-C₄-alkylaminen, wobei der Arylteil bis zu dreifach mit C₁-C₄-Alkyl, C₁-C₄-Alkoxy und Halogen wie Fluor, Chlor oder Brom substituiert sein kann.

Beispielhaft seien genannt Ammoniak, Methylamin, Ethylamin, n-Propylamin, i-Propylamin, n-Butylamin, 1-Methylpropylamin, 2-Methylpropylamin, 1,1- Dimethylethylamin, n-Pentylamin, 1-Methylbutylamin, 2-Methylbutylamin, 3-Methylbutylamin, 2-Dimethylpropylamin, 1-Ethylpropylamin, n-Hexylamin, n-Heptylamin, n-Octylamin, n-Nonylamin, n-Decylamin, n-Undecylamin, n- Dodecylamin, Stearylamin, Cyclopentylamin, Cyclohexylamin, Cycloheptylamin, Cyclooctylamin, Anilin, 2-, 3-, 4-Methylanilin, 2-, 3-, 4-Methoxyanilin, 2-, 3-, 4-Chloranilin, 2-, 3-, 4-Bromanilin, Benzylamin, Phenethylamin und Phenylpropylamin, besonders bevorzugt Cyclohexylamin.

Eine bevorzugte Ausführungsform zur Herstellung der Polymethacryl- und Polyacrylimide besteht darin, daß man den durch die Aminolyse der Estergruppen entstandenen Alkohol aus dem Reaktionsgemisch entfernt. Besonders vorteilhaft kann man dies durch kontinuierliches Abdestillieren des Alkohols erreichen. Hierzu ist es zweckmäßig, daß man für die Imidierung ein Amin verwendet, das einen höheren Siedepunkt aufweist als der aus dem Reaktionsgemisch zu entfernende Alkohol, so daß keine oder nur unwesentliche Mengen Amin mitentfernt werden.

Prinzipiell kann man auch Amine mit gleichem oder niedrigerem Siedepunkt als der abzudestillierende Alkohol einsetzen, indem man das mitentfernte Amin beispielsweise durch weitere Destillation vom Alkohol abtrennt und wieder in das Reaktionsgemisch einbringt. Jedoch ist die hier beschriebene Variante (Siedepunkt Amin > Siedepunkt Alkohol) aufgrund der einfacheren Reaktionsführung bevorzugt.

Die Reaktion führt man in der Regel so durch, daß man eine Mischung bestehend aus (Meth)Acrylat-Polymer und Amin bevorzugt in einem Lösungsmittel unter Sauerstoffausschluß zum Sieden erhitzt und den während der Reaktion entstehenden Alkohol durch Destillation kontinuierlich aus dem Reaktionsgemisch entfernt.

Das Amin kann man dabei gleich zu Beginn der Reaktion zugeben oder beispielsweise kontinuierlich, in dem Maße wie es verbraucht wird.

Das Gewichtsverhältnis von eingesetztem Amin zu Acrylat-Polymer wählt man in der Regel im Bereich von 1:1 bis 400:1, bevorzugt von 1:1 bis 200:1.

Als Lösungsmittel kann man prinzipiell alle aprotischen, polaren Lösungsmittel wie
N,N'-disubstituierte, cyclische oder acyclische Carbonsäureamide wie Dimethylformamid, Diethylformamid, Dimethylacetamid, Diethylacetamid
N-Methyl-2-pyrrolidon, N-Ethyl-2-pyrrolidon
N,N,N',N'-tetrasubstituierte, cyclische oder acyclische Harnstoffe wie Tetramethylharnstoff
N-substituierte, cyclische oder acyclische (Poly)Amine wie Dicyclohexylmethylamin, Dimethylcyclohexylamin, N,N,N',N'-Tetramethylethylendiamin, N,N,N',N'-Tetramethylhexamethylendiamin
hochsiedende Ether wie Ethylenglykoldimethylether, Diethylenglykoldimethylether
Alkylencarbonate wie Ethylencarbonat, Propylencarbonat sowie andere übliche aprotische und polare Lösungsmittel wie Hexamethylphosphorsäuretriamid, Nitroalkane wie Nitromethan, Dimethylsulfoxid, Diphenylsulfoxid und Sulfolan verwenden, wobei N-Methylpyrrolidon bevorzugt ist.

Das Gewichtsverhältnis von verwendetem Lösungsmittel zu Polymer liegt im allgemeinen im Bereich von 1:1 bis 100:1, bevorzugt von 1:1 bis 10:1.

Die Reaktionstemperatur wählt man im allgemeinen im Bereich von 100 bis 280°C, bevorzugt im Bereich von 120 bis 220°C. Der Reaktionsdruck ist in der Regel unkritisch. Man arbeitet im allgemeinen im Bereich von 80 bis 250 kPa, bevorzugt unter Atmosphärendruck.

Der pH-Bereich ist ebenfalls unkritisch und liegt wegen des eingesetzten Amins bzw. Ammoniaks in der Regel oberhalb von 7.

Die Reaktionszeit liegt in der Regel im Bereich von 1 bis 20 h, bevorzugt 1 bis 10 h.

Des weiteren kann man dem Reaktionsgemisch Katalysatoren in Mengen im Bereich von 0,01 bis 10 Gew.-%, bevorzugt von 0,05 bis 1 Gew.-%, bezogen auf das eingesetzte Polymer, zur Beschleunigung der Reaktion zusetzen. Beispielhaft seien genannt
tertiäre Amine wie Tricyclohexylamin,
substituierte Guanidine wie 1,1,3,3-Tetramethylguanidin und 1,3-Diphenylguanidin;
tetrasubstituierte Alkylammoniumverbindungen wie Trimethylstearylammoniumchlorid;
organische Titanverbindungen wie Tetrapropoxytitan und Tetrabutoxytitan;
organische Zinnverbindungen wie Dibutylzinnoxid und Dibutylzinndidodecanat;
aromatische Amine wie Chinolin, Isochinolin, 4-Benzylpyridin, 4-Phenylpyridin, 2-Hydroxypyridin, 1,3-, 1,4- und 2,3-Benzodiazin, 2,2'-, 2,3'- und 2,4'-Bipyridyl;
Imide wie N,N'-Dicyclohexylcarbodiimid;
sowie Antimontrioxid, Zinndioxid, Natriumamid, Natrium- und Kaliumalkoholate wie Natrium- und Kaliummethanolat, Ammoniumchlorid und Ammoniumiodid.

Das erfindungsgemäße Polymethacryl- bzw. Polyacrylimid kann man nach den üblichen Methoden zu Formkörpern verarbeiten, z.B. durch Spritzguß, Extrusion oder Sintern.

Die erfindungsgemäßen Polymethacryl- und Polyacrylimide und daraus hergestellte Formkörper haben den Vorteil gegenüber bekannten aus PMMA und Aminen hergestellten Polymerisaten, daß sie einen Gelbindex von < 1,8 haben, falls sie nach der bevorzugten Ausführungsform (Entfernung des durch die Aminolyse entstehenden Alkohols aus dem Reaktionsgemisch) hergestellt werden. Werden sie nach bekannten Methoden hergestellt, so weisen die erfindungsgemäß hergestellten Polymerisate deutlich bessere Yᵢ-Werte auf als die bekannten Polymethacrylimide. Des weiteren zeigen die erfindungsgemäß hergestellten Polymerisate bei der Mehrfachverarbeitung einen geringeren Zuwachs der Gelbstichigkeit auf als Polymethacrylimide aus dem Stand der Technik. Schließlich zeichnen sich die erfindungsgemäßen Polymerisate durch bessere APHA-Farbzahl-Werte gegenüber Polymethacrylimiden aus dem Stand der Technik aus.

### Beispiele

### Beispiele 1 - 6

In einem Reaktionsgefäß mit Füllkörperkolonne wurde eine Mischung aus 200 g PMMA (aus 99 Gew.-% MMA und 1 Gew.-% MA mit einem mittleren Molekulargewicht von Mₙ (Zahlenmittel) 115 000 g/mol), 150 g Cyclohexylamin, 600 g N-Methylpyrrolidon und 0,5 g einer Phosphorverbindung (siehe Tabelle 1) unter Stickstoff zum Sieden erhitzt. Nach etwa 1 h konnte Methanol am Kopf der Kolonne abgenommen werden, wobei während der nächsten 6 h so verfahren wurde, daß die Temperatur am Kolonnenkopf nicht mehr als 70°C betrug. Hierbei wurden 70 g Destillat erhalten. Anschließend wurde das im Überschuß vorhandene Amin abdestilliert und das Polymethacrylimid in Methanol ausgefällt und anschließend getrocknet.

Die Ergebnisse der Qualitätsprüfungen sind Tabelle 1 zu entnehmen.

### Vergleichsbeispiel 1

Beispiel 1 wurde ohne den Zusatz einer Phosphorverbindung unter ansonsten gleichen Bedingungen wiederholt. Die Ergebnisse der Qualitätsprüfungen sind Tabelle 1 zu entnehmen.

### Beispiele 7 - 8 (analog zu EP-B 234.726)

In einem Autoklaven wurde eine Lösung von 220 g PMMA (gleiche Zusammensetzung wie in Beispiel 1) in 600 g Toluol/Methanol (Gew.-Verhältnis 90/10), mit 150 g Cyclohexylamin und 0,5 g einer Phosphorverbindung (siehe Tabelle 2) versetzt und auf 230°C erhitzt. Nach 4 h wurde abgekühlt und das gebildete Polymer in Methanol ausgefällt und anschließend getrocknet.

Die Ergebnisse der Qualitätsprüfungen sind Tabelle 2 zu entnehmen.

### Vergleichsbeispiele 2 und 3 (analog zu EP-B 234.726)

Beispiel 7 wurde einmal mit Tricresylphosphit (Vgl.-Bsp. 2) und einmal ohne den Zusatz einer Phosphorverbindung (Vgl.-Bsp. 3) unter ansonsten gleichen Bedingungen wiederholt.

Die Ergebnisse der Qualitätsprüfungen sind Tabelle 2 zu entnehmen.

### Beispiel 9 (analog zu US-A 4,246,374)

Auf einem Zweischneckenextruder (ZSK-40) mit gleichlaufenden, kämmenden Schnecken wurde eine Mischung aus 9975 g PMMA (gleiche Zusammensetzung wie in Beispiel 1) und 25 g einer Phosphorverbindung (siehe Tabelle 3) kontinuierlich bei einer Temperatur von 270°C mit 5 kg/h Cyclohexylamin umgesetzt. Die Reaktionszeit betrug dabei 0,1 h. Nach der Reaktionszone wurde die Polymerschmelze auf dem gleichen Extruder entgast und granuliert.

Die Ergebnisse der Qualitätsprüfungen sind Tabelle 3 zu entnehmen.

### Vergleichsbeispiel 4 (analog zu US-A 4,246,374)

Beispiel 9 wurde ohne den Zusatz einer Phosphorverbindung unter ansonsten gleichen Bedingungen wiederholt.

Die Ergebnisse der Qualitätsprüfungen sind Tabelle 3 zu entnehmen.

### Beispiel 10 (Mehrfachverarbeitung)

Auf einem Zweischneckenextruder (ZSK-40) mit gleichlaufenden, kämmenden Schnecken wurden 15 kg/h des in Beispiel 10 hergestellten Polymethacrylimids kontinuierlich bei einer Temperatur von 270°C mehrfach extrudiert. Die Reaktionszeit betrug dabei jeweils 0,1 h. Nach der Reaktionszone wurde die Polymerschmelze auf dem gleichen Extruder entgast und granuliert. Nach jeder Extrusion wurde eine Rundscheibe (d=80 mm, h=6 mm) bei 240°C gepreßt und der Gelbindex Yᵢ gemessen.

Die Ergebnisse der Qualitätsprüfungen sind Tabelle 4 zu entnehmen.

### Vergleichsbeispiel 5 (Mehrfachverarbeitung)

Beispiel 10 wurde mit dem Polymerisat aus Vergleichsbeispiel 4 (kein Zusatz einer Phosphorverbindung) wiederholt.

Die Ergebnisse der Qualitätsprüfungen sind Tabelle 4 zu entnehmen.

Der Yᵢ-Gelbindex wurde gemäß DIN 6 167 an Rundscheiben (d = 80 mm, Höhe= 6 mm) bestimmt.

Die APHA-Farbzahl (s. Römpps Chemie-Lexikon, Bd. 2, 8. Auflage, S. 1243) wurde an einer 10 gew.-%igen Lösung des jeweiligen erfindungsgemäßen Polymerisats in N-Methylpyrrolidon in einem Spektrometer (Beckmann, DU, Series 60) bestimmt.

**Tabelle 1**

| Beispiele 1 bis 6, Vergleichsbeispiel 1 | | | |
|---|---|---|---|
| Beispiel-Nr. | Phosphorverb. | APHA-Farbzahl | Yᵢ |
| 1 | H₃PO₂ | 51 | 0,8 |
| 2 | NaH₂PO₂ | 69 | 0,9 |
| 3 | KH₂PO₂ | 72 | - |
| 4 | NH₄H₂PO₂ | 43 | 0,8 |
| 5 | H₃PO₃ | 103 | 1,2 |
| 6 | Na₂HPO₃ | 121 | - |
| Vgl.-Bsp. 1 | - | 203 | 1,8 |

**Tabelle 2**

| Versuche analog zu EP-B 234 726 | | | |
|---|---|---|---|
| Beispiel-Nr. | Phosphorverb. | APHA-Farbzahl | Yᵢ |
| 7 | H₃PO₂ | 131 | 2,1 |
| 8 | NH₄H₂PO₂ | 109 | 2,1 |
| Vgl.-Bsp. 2 | Tricresylphosphit | 531 | 6,9 |
| Vgl.-Bsp. 3 | - | 334 | 3,2 |

**Tabelle 3**

| Versuche analog zu US-A 4 246 374 | | |
|---|---|---|
| Beispiel-Nr. | Phosphorverb. | Yᵢ |
| 9 | NH₄H₂PO₂ | 1,8 |
| Vgl.-Bsp. 4 | - | 4,1 |

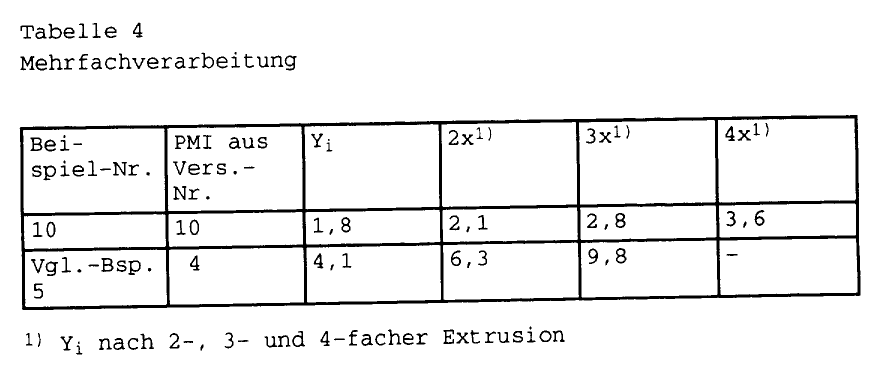

## Patentansprüche

1. Polymerisat, enthaltend im wesentlichen Einheiten der Formel I 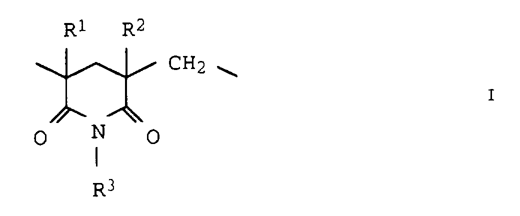 in der
R¹ und R für Wasserstoff oder Methyl stehen und
R³ Wasserstoff, C₁-C₁₈-Alkyl, C₅-C₈-Cycloalkyl, C₆-C₁₀-Aryl, C₆-C₁₀-Aryl-C₁-C₄-alkyl bedeutet, wobei diese Reste bis zu dreifach mit Resten ausgewählt aus der Gruppe bestehend aus C₁-C₄-Alkyl, C₁-C₄-Alkoxy und Halogen substituiert sein können,
mit einem Gelbwert Yᵢ von weniger als 1,8,
erhältlich durch Umsetzen eines Polymeren auf Basis von C₁-C₂₀-Alkylestern der Methacrylsäure und/oder Acrylsäure mit einem primären Amin der allgemeinen Formel II
R³NH₂ II
in Gegenwart einer Verbindung, ausgewählt aus der Gruppe bestehend aus Phosphinsäure und Phosphonsäure und deren Alkalimetall-, Erdalkalimetall- und Aluminium- sowie deren Ammoniumsalzen, wobei das Ammoniumion mit bis zu vier C₁-C₄-Alkyl- und/oder C₅-C₈-Cycloalkylgruppen substituiert sein kann, oder deren Mischungen.

2. Verfahren zur Herstellung eines Polymerisates gemäß Anspruch 1 durch Umsetzen eines Polymeren auf Basis von C₁-C₂₀-Alkylestern der Methacrylsäure und/oder Acrylsäure mit einem primären Amin der allgemeinen Formel II
R³NH₂ II
dadurch gekennzeichnet, daß man die Umsetzung in Gegenwart einer Verbindung, ausgewählt aus der Gruppe bestehend aus Phosphinsäure und Phosphonsäure und deren Alkalimetall-, Erdalkalimetall- und Aluminium- sowie deren Ammoniumsalzen, wobei das Ammoniumion mit bis zu vier C₁-C₄-Alkyl- und/oder C₅-C₈-Cycloalkylgruppen substituiert sein kann, oder deren Mischungen, durchführt.

3. Verwendung der Polymerisate gemäß Anspruch 1 zur Herstellung von Formkörpern.

4. Formkörper, erhältlich aus Polymerisaten gemäß Anspruch 1.

## Claims

1. A polymer containing essentially units of the formula I 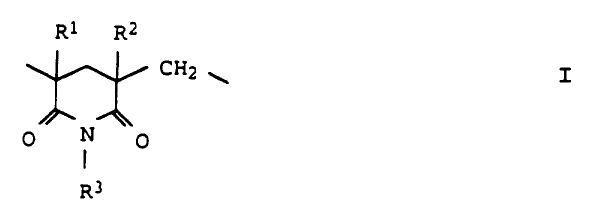 where
R¹ and R are each hydrogen or methyl, and
R³ is hydrogen, C₁-C₁₈-alkyl, C₅-C₈-cycloalkyl, C₆-C₁₀-aryl or C₆-C₁₀-aryl-C₁-C₄-alkyl, each of which may be monosubstituted, disubstituted or trisubstituted by radicals selected from the group consisting of C₁-C₄-alkyl, C₁-C₄-alkoxy and halogen,
having a yellowness index Yi of less than 1.8, obtainable by reacting a polymer based on C₁-C₂₀-alkyl esters of methacrylic acid and/or acrylic acid with a primary amine of the general formula II
R³NH₂ II
in the presence of a compound selected from the group consisting of phosphinic acid and phosphonic acid and their alkali metal, alkaline earth metal, aluminum and ammonium salts, wherein the ammonium ion can be monosubstituted, disubstituted, trisubstituted or tetrasubstituted by C₁-C₄-alkyl and/or C₅-C₈-cycloalkyl, or mixtures thereof.

2. A process for preparing a polymer as claimed in claim 1 by reacting a polymer based on C₁-C₂₀-alkyl esters of methacrylic acid and/or acrylic acid with a primary amine of the general formula II
R³NH₂ II
which comprises carrying out the reaction in the presence of a compound selected from the group consisting of phosphinic acid and phosphonic acid and their alkali metal, alkaline earth metal, aluminum and ammonium salts, wherein the ammonium ion can be monosubstituted, disubstituted, trisubstituted or tetrasubstituted by C₁-C₄-alkyl and/or C₅-C₈-cycloalkyl, or mixtures thereof.

3. The use of polymers as claimed in claim 1 for preparing moldings.

4. Moldings obtainable from polymers as claimed in claim 1.

## Revendications

1. Produit de polymérisation contenant essentiellement des motifs de formule I 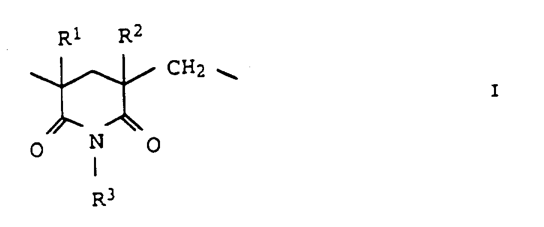 dans laquelle
R¹ et R sont mis pour des atomes d'hydrogène ou des groupements méthyle et
R³ représente un atome d'hydrogène ou un groupement alkyle en C₁-C₁₈, cycloalkyle en C₅-C₈, aryle en C₆-C₁₀, (aryle en C₆-C₁₀)alkyle en C₁-C₄, ces restes pouvant être substitués jusqu'à trois fois par des restes choisis dans le groupe constitué par les groupements alkyle en C₁-C₄, alcoxy en C₁-C₄ et les atomes d'halogène,
ayant un indice de jaune Yᵢ de moins de 1,8,
obtenu par réaction d'un polymère à base d'esters alkyliques en C₁-C₂₀ de l'acide méthacrylique et/ou de l'acide acrylique avec une amine primaire de formule générale II
R³NH₂ II
en présence d'un composé choisi dans le groupe constitué par l'acide phosphinique, l'acide phosphonique et leurs sels de métaux alcalins, de métaux alcalino-terreux et d'aluminium ainsi que leurs sels d'ammonium, l'ion ammonium pouvant être substitué jusqu'à quatre fois par des groupements alkyle en C₁-C₄ et/ou cycloalkyle en C₅-C₈, ou en présence de mélanges de ces composés.

2. Procédé de préparation d'un produit de polymérisation selon la revendication 1, par réaction d'un polymère à base d'esters alkyliques en C₁-C₂₀ de l'acide méthacrylique et/ou de l'acide acrylique avec une amine primaire de formule générale II
R³NH₂ II
caractérisé en ce que l'on mène la réaction en présence d'un composé choisi dans le groupe constitué par l'acide phosphinique, l'acide phosphonique et leurs sels de métaux alcalins, de métaux alcalino-terreux et d'aluminium ainsi que leurs sels d'ammonium, l'ion ammonium pouvant être substitué jusqu'à quatre fois par des groupements alkyle en C₁-C₄ et/ou cycloalkyle en C₅-C₈, ou en présence de mélanges de ces composés.

3. Utilisation des produits de polymérisation selon la revendication 1 pour la fabrication de corps moulés.

4. Corps moulés obtenus à partir de produits de polymérisation selon la revendication 1.
